# EUROPÄISCHE PATENTSCHRIFT

(11) **EP 0 810 763 B1**
(45) Veröffentlichungstag und Bekanntmachung des Hinweises auf die Patenterteilung: **17.09.2008**
(21) Anmeldenummer: 97107806.8
(22) Anmeldetag: 13.05.1997
(51) Int. Cl.: H04M 3/42

(54) **Verfahren zur Zulässigkeitsprüfung von Rufnummern von an einem Kommunikationssystem ankommende Anrufen**
Method for checking the permissibility of call numbers of telephone calls coming from a communication system
Procédé de contrôle d'admissibilité des numéros d'abonnés des appels venant d'un système de communication

(30) Priorität: 31.05.1996 DE 19622068
(43) Veröffentlichungstag der Anmeldung: 03.12.1997
(73) Patentinhaber: Siemens Enterprise Communications GmbH & Co. KG, 81379 München (DE)
(72) Erfinder: Spahl, Siegfried, Dipl.-Ing., 82178 Puchheim (DE); Ramberger, Friedrich, Ing., 2332 Hennersdorf (AT); Mayer, Adolf, Dipl.-Ing., 2325 Pellendorf (AT)
(74) Vertreter: Maier, Daniel Oliver

(56) Entgegenhaltungen:
- DE-A- 3 433 660
- US-A- 5 408 528
- US-A- 5 454 033

## Beschreibung

Für eine Steuerung von Leistungsmerkmalen in einem Kommunikationsnetz, insbesondere privaten Kommunikationsnetz, ist eine Kopplung der Kommunikationssysteme, insbesondere private Nebenstellenanlagen, mit einer Applikationseinrichtung über eine Applikationsschnittstelle bzw. ACL-Schnittstelle vorgesehen. Gemäß dieser Applikationsschnittstelle ist physikalisch das private Kommunikationssystem, beispielsweise das Kommunikationssystem HICOM 300 der Fa. Siemens, über eine V.24-Schnittstelle oder alternativ über eine ISDN-Basisschnittstelle (SO) mit der Applikationseinrichtung verbunden. Die Applikationsschnittstelle ist vorzugsweise in einer Betriebstechnik-Einheit - beim Kommunikationssystem HICOM 300 ein integrierter Betriebstechnik-Server - eines Kommunikationssystems realisiert und steuert den Kommunkationsaustausch gemäß einem definierten Protokoll - z.B. MSV1 - mit definierten Meldungen. Die in die Meldungen eingebetteten Informationen entsprechen den vermittlungstechnischen Anweisungen und Ereignismeldungen des Kommunikationssystems. Als Bindeglied zwischen der Applikationseinrichtung und dem Kommunikationssystem ist in diesem eine zur Ausführung der vermittlungstechnischen Anweisungen und zum Generieren der vermittlungstechnischen Ereignismeldungen geeignete, d.h. eine DVAgesteuerte Verbindungsaufbauten unterstützende Programmstruktur bzw. eine Vermittlungsroutine vorgesehen, wobei durch die vermittlungstechnischen Anweisungen die Verbindungssteuerung beeinflußt und durch vermittlungstechnische Ereignismeldungen der aktuelle vermittlungstechnische Zustand von Verbindungen, d.h. auch von im Verbindungsaufbau befindlichen, ankommenden Anrufen, angezeigt wird.

In Kommunikationssystemen können bestimmte Verbindungen, beispielsweise Datenverbindungen, unerwünscht sein und sollen nicht vermittelt werden. Desweiteren sind Verbindungsaufbauten mit beispielsweise ungültigen bzw. nicht mehr erlaubten Ziel-Rufnummern durch das Kommunikationssystem derart zu unterstützen, dass ein Verbindungsaufbau zum alternativ erlaubten Kommunikationsendgerät ermöglicht wird.

Eine Freigabe bzw. Sperrung einer Verkehrsbeziehung ist bereits aus dem Stand der Technik bekannt. In der DE 3433660 A1 ist ein Verfahren für eine Wählnebenstellenanlage, die mit einem betriebstechnischen Terminal ausgerüstet ist, offenbart, bei dem Teilnehmerstellen jeweils einer von mehreren Teilnehmerklassen zugeordnet sind. Eine Freigabe oder Sperrung einer Verkehrsbeziehung wird durch den Inhalt einer abgespeicherten Tabelle bestimmt, wobei für einzelne Teilnehmerstellen unterschiedliche Berechtigungen für bestimmte Verkehrsbeziehungen vorgesehen werden können.

Die der Erfindung zugrundeliegende Aufgabe besteht darin, ein Verfahren zur Unterstützung einer flexibeln Zulässigkeitsprüfung von Rufnummern von an einem Kommunikationssystem ankommenden Anrufen unter Berücksichtigung geringer schaltungs- und programmtechnischer Modifikation des Kommunikationssystem auszugestalten. Die Aufgabe wird durch die Merkmale des Patentanspruch 1 gelöst.

Der wesentliche Aspekt des erfindungsgemäßen Verfahrens ist darin zu sehen, dass im Kommunikationssystem für eine Zulässigkeitsprüfung vorgesehene Kommunktionsanschlüsse zumindest einer Sperr-Wahlbewertungsroutine zugeordnet sind und die von den vorgesehenen Kommunikationsschlüssen im Rahmen eines Anrufs übermittelten Rufnummern sowie die Rufnummer des jeweiligen Kommunikationsanschlusses erfasst und nicht bewertbare Rufnummern und Rufnummernkombinationen über die Applikationsschnittstelle an die Applikationseinrichtung gemeldet werden. Die Anrufe werden im Kommunikationssystem solange gehalten, bis in der Applikationseinrichtung die übermittelten, nicht bewertbaren Rufnummern bzw. Rufnummerkombinationen hinsichtlich ihrer Zulässigkeit überprüft und ein Zulässigkeitsergeb nis von der Applikationseinrichtung an das Kommunikationssystem übermittelt ist. Nicht bewertbare Rufnummern bzw. Rufnummernkombinationen sind beispielsweise Rufnummern, die ein Prefix - z.B. ISDN-Kommunikationsnetz-Kennzahl - enthalten, die in der Sperr-Wahlbewertungsroutine aufgrund ihrer vorgegebenen eingeschränkten Bewertungseigenschaften nicht bewertet werden können. Ein wesentlicher Vorteil des erfindungsgemäßen Verfahren ist darin zu sehen, dass im Kommunikationssystem für die zu überprüfenden Kommunikationsanschlüsse lediglich eine Sperr-Wahlbewertungsroutine einzurichten ist und somit die Zulässigkeitsprüfung von Rufnummern von ankommenden Anrufen mit geringstem zusätzlichen Aufwand im Kommunikationssystem realisiert wird. Des weiteren ist durch die Zulässigkeitsprüfung in der Applikationseinrichtung eine größtmögliche Flexibilität hinsichtlich der Überprüfungsfunktionen und eventueller Umsetzfunktionen erreicht, da die Applikationseinrichtung - Anspruch 11 - vorteilhaft durch einen Personalcomputer realisiert ist - Anspruch 12 - und somit durch Eingaben an der Bedieneroberfläche oder durch Laden von Programmen die Prüfungs- und Umsetzfunktionen jederzeit ohne Beeinflussung des Kommunikationssystems modifiziert werden können.

Nach der Zulässigkeitsprüfung wird im Kommunikationssystem in Abhängigkeit von dem jeweiligen, von der Applikationseinrichtung übermittelten Zulässigkeitsergebnis der jeweilige Anruf zugelassen, abgebrochen oder umgesteuert - Anspruch 2. Durch das Abbrechen von Verbindungsaufbauten bzw. ankommenden Anrufen werden nicht erlaubte Verbindungen verhindert und Fehlverbindungen - beispielsweise Datenverbindung zu einem Rechner - vermieden. Bei möglichen Umsteuerungen kann der Verbindungsaufbau mit geänderten oder gleichen Rufnummern weitergeführt werden.

Gemäß einer vorteilhaften Weiterbildung des erfindungsgemäßen Verfahrens wird in der Applikationseinrichtung mit Hilfe von gespeicherten Ursprungs-Ziel-Rufnummernkombinationen und der gemeldeten Ziel- und Ursprungs-Rufnummernkombinationen eines Anrufs die Zulässigkeit der angegebenen Verkehrsbeziehung überprüft und in Abhängigkeit von der Übereinstimmung der Rufnummernkombinationen ein Zulässigkeitsergebnis an das Kommunikationssystem übermittelt wird, wobei bei unzulässigen Verkehrsbeziehungen durch das übermittelte Zulässigkeitsergebnis der jeweilige Anruf zurückgewiesen und bei zulässigen Verkehrsbeziehungen durch das Zulässigkeitsergebnis der Verbindungsaufbau des jeweilige Anrufs weitergeführt wird - Anspruch 3. Die Überprüfung auf Verkehrsbeziehungen ist beispielsweise zur Überprüfung von Datenverbindungen vorgesehen, bei den nur Kommunikationsanschlüsse vermittelt werden sollen, an die Datenübertragungseinrichtungen angeschlossen sind.

Gemäß einer weiteren vorteilhaften Ausgestaltung des erfindungsgemäßen Verfahrens wird in der Applikationseinrichtung mit Hilfe von gespeicherten Rufnummern und von der gemeldeten Ziel-Rufnummer eines Anrufs die Zulässigkeit der Rufnummer überprüft und eine festgestellte, unzulässige Ziel-Rufnummer in eine zulässige Ziel-Rufnummer umgewertet. Als Zulässigkeitsergebnis wird die umgewertete Ziel-Rufnummer an die Sperr-Wahlbewertungsroutine im Kommunikationssystem übermittelt und der Verbindungsaufbau des jeweiligen Anrufs mit der umgewerteten Ziel-Rufnummer weitergeführt - Anspruch 4. Diese Umwertung ist beispielsweise für die Umwertung von nicht mehr gültigen Rufnummern oder für die Umwertung von Rufnummern vorgesehen, mit deren Hilfe ein ankommender Anruf über ein weiteres, beispielsweise gebührengünstigeres Kommunikationsnetz zu einem Ziel-Kommunikationsendgerät geroutet werden soll.

Gemäß einer weiteren vorteilhaften Ausgestaltung des erfindungsgemäßen Verfahrens wird in der Applikationseinrichtung mit Hilfe von gespeicherten Rufnummern und von der gemeldeten Ziel-Rufnummer eines Anrufs die Zulässigkeit der Sperr-Wahlbewertungsroutine überprüft und nach dem Feststellen einer für die Bearbeitung der Ziel-Rufnummer unzulässigen Sperr-Wahlbewertungsroutine wird eine zulässige Wahlbewertungsroutine des Kommunikationssystems ermittelt und die Zielrufnummer an die ermittelte Wahlbewertungsroutine übermittelt, auf die der Anruf umgelenkt und in der der Verbindungsaufbau des Anrufs weitergeführt wird - Anspruch 5.

Gemäß einer Weiterbildung des erfindungsgemäßen Verfahren wird die Zulässigkeitsprüfung mit Hilfe einer in der Sperr-Wahlbewertungsroutine gebildeten und an die Applikationseinrichtung übermittelten Sperr-Wahlbewertungsroutinen-Meldung eingeleitet und das Überprüfungsergebnis durch eine in der Applikationseinrichtung gebildeten und an das Kommunikationssystem übermittelten betriebstechnischen Applikationsanweisung gemeldet - Anspruch 6.

Weitere vorteilhafte Ausgestaltungen des erfindungsgemäßen Verfahrens, insbesondere der Aufbau einer Wahlbewertungsroutinen-Meldung, einer betriebstechnischen Applikationsanweisung und einer Auftragsanforderung bzw. Auftragsquittung und die Ausgestaltung einer Applikationseinrichtung zur Durchführung des erfindungsgemäßen Verfahrens sind den weiteren Ansprüchen zu entnehmen.

Im folgenden wird das erfindungsgemäße Verfahren sowie die erfindungsgemäße Applikationseinrichtung anhand von zwei Blockschaltbildern und eines Ablaufdiagrammes näher erläutert. Dabei zeigen
- FIG 1: ein Kommunikationssystem mit einer angeschlossenen Applikationseinrichtung,
- FIG 2 A-C: den Aufbau einer Sperr-Wahlbewertungsroutinen-Meldung, einer betriebstechnische Applikationsanweisung und einer Auftragsanforderung bzw. Auftragsquittung und
- FIG 3: in einem Ablaufdiagramm die Funktionsweise einer Rufnummernbewertungsroutine

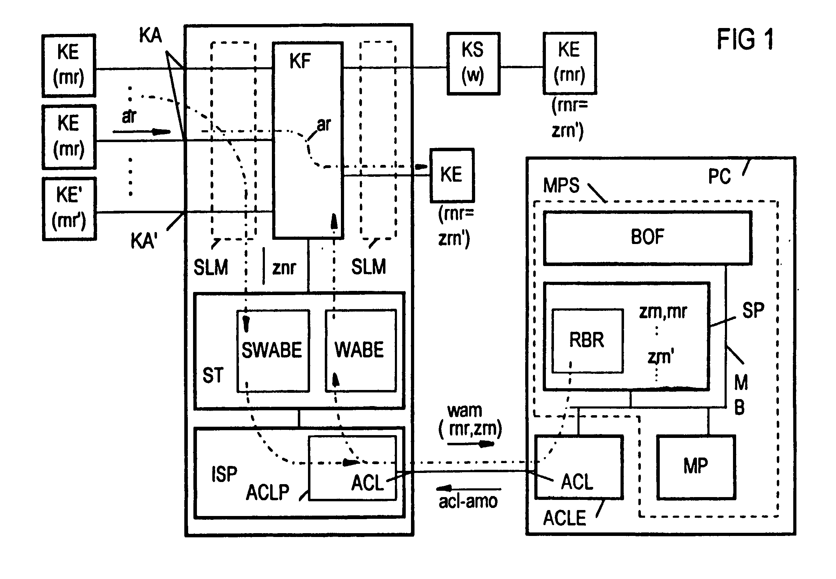

FIG 1 zeigt ein Kommunikationssystem KS - insbesondere ein privates Kommunikationssystem - mit einer Applikationsschnittstelle - im weiteren mit ACL-Schnittstelle ACL bezeichnet -, an die über eine gleichartig realisierte ACL-Schnittstelle ACL eine durch einen Personalcomputer realisierte Applikationseinrichtung PC - im weiteren mit Personalcomputer PC bezeichnet, angeschlossen ist. Im Kommunikationssystem KS ist die ACL-Schnittstelle ACL durch eine in einen integrierten Betriebstechnik-Server ISP implementierte ACL-Programmstruktur ACLP realisiert; im Personalcomputer PC ist die ACL-Schnittstelle ACL in einer ACL-Einheit ACLE physikalisch und prozedural realisiert. Die Abkürzung ACL steht für Applications Connetivity Link und bedeutet, daß über die ACL-Schnittstelle ACL ein Kommunikationsaustausch für eine applikationsabhängige Verbindungssteuerung im Kommunikationssystem KS über eine Verbindung, d.h. einen Link gesteuert wird.

Das Kommunikationssystem KS weist für die vermittlungstechnische Steuerung eine Steuereinrichtung ST auf, die mit dem Koppelfeld KF und dem integrierten Betriebstechnik-Server ISP verbunden ist. In der Steuereinrichtung ST ist neben der nicht dargestellten vermittlungs- und betriebstechnischen Programmstruktur eine Sperr-Wahlbewertungsroutine SWABE vorgesehen. Die Sperr-Wahlbewertungsroutine SWABE wird durch betriebstechnische Anweisungen amo über den Betriebstechnik-Server ISP eingerichtet. Vorteilhaft wird eine der vorhandenen, für die Wahlbewertung vorgesehenen Wahlbewertungsroutinen WABE durch entsprechende betriebstechnische Anweisungen als Sperr-Wahlbewertungsroutine SWABE konfiguriert. Der Sperr-Wahlbewertungsroutine SWABE werden wiederum durch entsprechende betriebstechnische Anweisungen Kommunikationsanschlüsse KA des Kommunikationssystems KS zugeordnet, wobei an die zugeordneten Kommunikationsanschlüsse KA Kommunikationsendgeräte KE anschließbar sind. Diese und weitere Kommunikationsanschlüsse KA,KA' sind über Teilnehmeranschlußeinheiten SLM - durch strichlierte Linien angedeutet - mit dem Koppelfeld KF des Kommunikationssystems KS verbunden. Für das Ausführungsbeispiel sei angenommen, daß einem Kommunikationsanschluß KA,KA' bzw. dem daran angeschlossenen Kommunikationsendgerät KE,KE' eine Rufnummer rnr,rnr' zugeordnet ist.

Von den Teilnehmeranschlußeinheiten SLM des Kommunikationssystem KS werden die von den im Rahmen eines Verbindungsaufbaus gewählten Rufnummern bzw. Ziel-Rufnummern zrn der zugeordneten Kommunikationsanschlüsse KA an die Sperr-Wahlbewertungsroutine SWABE in der Steuereinheit ST übermittelt. In dieser werden die übermittelten Rufnummern zrn zusammen mit ihrer Rufnummer rnr - d.h. die Rufnummer rnr des rufenden Kommunikationsendgerätes KE - erfaßt und die nicht bewertbaren Rufnummern zrn bzw. Rufnummerkombinationen rnr,zrn über die ACL-Schnittstelle ACL an den Personalcomputer PC übermittelt, wobei eine Rufnummernkombination rnr,zrn die Kombination einer das rufende Kommunikationsendgerät KE repräsentierenden Ursprungs-Rufnummer rnr und der durch das jeweilige Kommunikationsendgerät KE gewählten Ziel-Rufnummer zrn darstellt. Nicht bewertbare Rufnummern zrn stellen beispielsweise eine Prefix-Rufnummer 12 des Fernmeldedienst es ISDN oder eine Landes- oder Regional-Rufnummern dar. Diese nicht bewertbaren Rufnummern zrn oder der Rufnummernkombinationen rnr, zrn werden in eine Sperr-Wahlbewertungsroutinen-Meldung wam einfügt und an den Personalcomputer PC übermittelt. Nach Empfang einer das Zulässigkeitsergebnis repräsentierenden betriebstechnischen Applikationsanweisung (acl-amo) im Kommunikationssystem KS wird entsprechend den übermittelten vermittlungstechnischen Anweisungen der durch das jeweilige Kommunikationsendgerät KE eingeleitete und bis zum Empfang der betriebstechnischen Applikationsanweisung acl-amo gehaltene Verbindungsaufbau an eine andere Wahlbewertungsroutine WABE umgelenkt, mit einer geänderten Ziel-Rufnummer zrn' weitergeführt oder ausgelöst, d.h. beendet.

Der Personalcomputer PC weist ein Mikroprozessorsystem MPS auf, in dem an einen Mikroprozessorbus MB ein Mikroprozessor MP, ein Speicher SP, eine ACL-Einheit ACLE und eine Bedieneroberfläche BOF angeschlossen sind. Die Bedieneroberfläche BOF ist PC-üblich durch eine Bildschirmeinrichtung und eine Tastatur gebildet - nicht dargestellt. In dem einem Daten- und Programmbereich aufweisenden Speicher SP ist eine Rufnummernbewertungsroutine RBR gespeichert. Basierend auf dem vorhergehend erläuterten Kommunikationssystem KS ist mit Hilfe der Wahlbewertungsroutine RBR die erfindungsgemäße Zulässigkeitsprüfung realisiert. Im Speicher SP sind des weiteren die für eine Zulässigkeitsprüfung vorgesehenen Ziel- und Ursprungsrufnummern zrn,rnr bzw. Rufnummernkombinationen oder Umlenkungs-Rufnummern rzn' gespeichert.

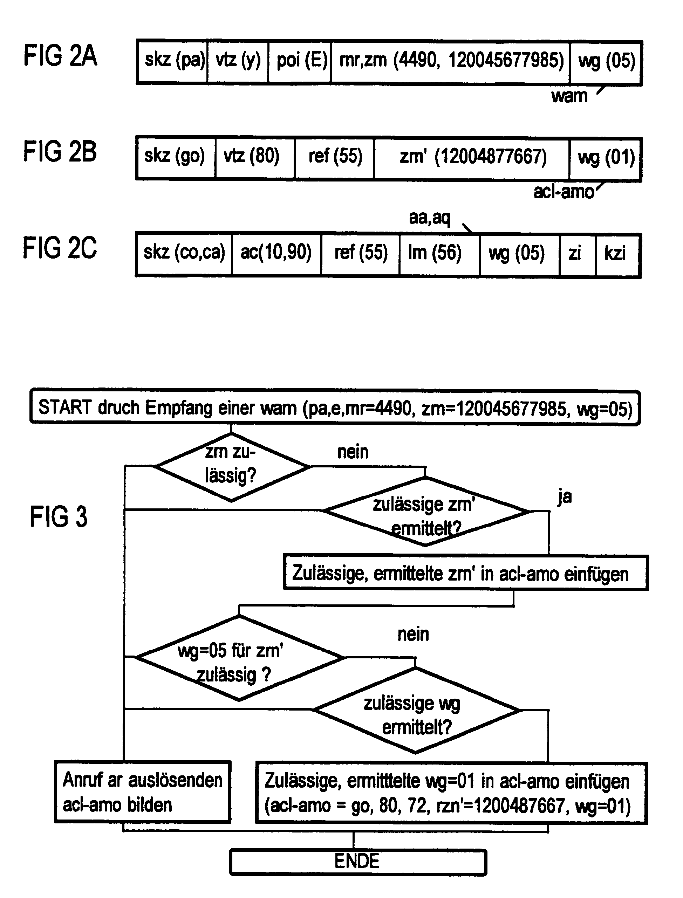

Für das Ausführungsbeispiel ist beispielhaft angenommen, daß am Kommunikationsanschluß KA mit der Rufnummer rnr=4490 ein angeschlossenes Daten-Kommunikationsendgerät KE nicht berechtigt ist, eine ISDN-Rufnummer 12 0045 6 77985 zu wählen, jedoch berechtigt ist, die ISDN-Rufnummer 12 0048 7 667 zu wählen. Mit Hilfe der FIG 2A bis 2C dargestellten Sperr-Wahlbewertungsroutinen-Meldung wam, betriebstechnischen Applikationsanweisung acl-amo sowie Auftragsanforderung bzw. Auftragsbestätigung aa,aq wird bezogen auf die vorhergehenden beispielhaften Annahmen die erfindungsgemäße Sperr-Wahlbewertungsroutinen SWABE aktiviert und der Informationsaustausch zwischen dem Kommunikationssystem KS und der Applikationseinrichtung PC bewirkt. Hierbei ist vorausgesetzt, daß im Kommunikationssystem KS die Sperr-Wahlbewertungsroutinen SWABE durch betriebstechnische Anweisungen derart eingerichtet ist, daß sie durch eine Auftragsanforderung aa aktiviert werden kann und die zu bewertenden Kommunikationsanschlüsse KA bzw. deren zugeordnete Rufnummern rnr dieser Sperr-Wahlbewertungsroutinen SWABE zugeordnet sind, d.h. Rufnummern zrn von an den zugeordneten Kommunikationsanschlüssen KA ankommenden Anrufen ar werden an die Sperr-Wahlbewertungsroutine SWABE gesteuert.

Das Aktivieren bzw. auch das Deaktivieren einer Sperr-Wahlbewertungsroutine SWABE wird durch eine in FIG 2 C dargestellte Auftragsanforderung aa bzw. Auftragsquittung aq durchgeführt. Eine Auftragsanforderung aa bzw. Auftragsquittung aq ist durch eine Identifikationsinformation skz (co), eine im Kommunikationssystem KS das Aktivieren bzw. Deaktivieren bewirkende Auftragsinformation ac (10,90) bzw. eine das Aktivieren bzw. Deaktivieren bestätigende Auftragsquittierungsinformation ac (10,90), eine Referenzinformation ref (z.B.55), eine das zu beeinflussende Leistungsmerkmal anzeigende Leistungsmerkmalinformation lm (z.B. 96 für Einrichten einer Sperr-Wahlbewertungsroutinen SWABE) und eine die jeweilige Wahlbewertungsroutine WABE anzeigende Wahlbewertungsinformation wg (z.B. Wahlbewertungsroutine 05) gebildet, wobei die auf das Ausführungsbeispiel bezogenen Informationen in Klammern gesetzt angegeben sind. Eine die Anzahl von zur Bewertung heranzuziehenden Ziffern anzeigende Zifferninformation zi und eine den einer Ziffernkombination zugeordneten Kennzahlpunkt anzeigende Kennzahlpunktinformation kzi ist beim Ausführungsbeispiel nicht vorgesehen. Die vom Kommunikationssystem KS zu der Applikationseinrichtung PC übermittelte Auftragsquittung aq ist gleichartig aufgebaut, wobei bei positiver Bestätigung die Identifikationsinformation skz in den Wert (ca) geändert ist.

Wird im Daten-Kommunikationsendgerät KE - Rufnummer 4490 - die ISDN-Rufnummer 12 0045 6 77985 gewählt, so wird diese an die aktivierte Sperr-Wahlbewertungsroutine SWABE gesteuert und in dieser als nicht bewertbar erkannt, da die Sperr-Wahlbewertungsroutinen SWABE gemäß dem Ausführungsbeispiel für die Bewertung von ISDN-Rufnummern nicht ausgebildet ist. Die in der Sperr-Wahlbewertungsroutinen SWABE erfaßten Ursprungs-und Zielrufnummern rnr,zrn werden in eine Sperr-Wahlbewertungsroutinen-Meldung wam eingefügt und über die ACL-Schnittstelle ACL an die Applikationseinrichtung PC übermittelt. Eine in FIG 2 A dargestellte Sperr-Wahlbewertungsroutinen-Meldung wam ist durch eine die Art der Sperr-Wahlbewertungsroutinen-Meldung wam anzeigende Identifikationsinformation skz (pa), eine zu bewertende Rufnummern rnr,zrn in der Sperr-Wahlbewertungsrountine SWABE anzeigende Vermittlungsinformation vzt (Y), eine die Initialisierung der Sperr-Wahlbewertungsroutinen-Meldung wam anzeigende Modulinformation poi (E), eine den rufenden und gerufenen Kommunikationsanschluß KA bestimmende Rufnummer rnr, zrn (4490, 120045677985), sowie eine die meldende Wahlbewertungsroutine SWABE anzeigende Wahlbewertungsinformation wg (05) gebildet, wobei die auf das Ausführungsbeispiel bezogenen Informationen in Klammern gesetzt angegeben sind.

In der Applikationseinrichtung PC ergibt die Zulässigkeitsprüfung der übermittelten Rufnummern rnr, zrn, daß sowohl die Ziel-Rufnummer zrn als auch die verwendete Wahlbewertungsroutinen WABE unzulässig sind. Beim Ausführungsbeispiel ist vorausgesetzt, daß die zulässige ISDN-Rufnummer 12 0048 7667 im Speicher der Applikationseinrichtung PC gespeichert ist und durch die Zulässigkeitsprüfung ermittelt wird. Dies bedeutet eine Umwertung der übermittelten Ziel-Rufnummer zrn in die ermittelte Ziel-Rufnummer zrn'. Für die Bewertung von ISDN-Rufnummern ist bei der Zulässigkeitsprüfung die erste Wahlbewertungsroutine WABE ermittelt worden. Die ermittelten Rufnummern zrn' und Informationen über die ermittelte Wahlbewertungsroutinen WABE werden in eine in der FIG 2B dargestellten, betriebstechnische Applikationsanweisung acl-amo eingefügt.

Eine betriebstechnische Applikationsanweisung acl-amo umfaßt eine die Art der betriebstechnischen Applikationsanweisung acl-amo anzeigende Identifikationsinformation skz (go), eine die vermittlungstechnische Aktion anzeigende Vermittlungsinformation vtz (80), eine die Zuordnung der betriebstechnischen Applikationsanweisung acl-amo anzeigende Referenzinformation ref - beispielsweise die Zahl (55)-, eine im Kommunikationssystem KS erneut zu bewertende Rufnummer rnz' (1200487667), an die der Ruf ar umzuleiten ist, sowie eine andere Wahlbewertungsroutine WABE anzeigende Wahlbewertungsinformation wg (01). Nach Empfang der betriebstechnischen Applikationsanweisung acl-amo im Kommunikationssystem KS wird in diesem der Ruf ar an die erste Wahlbewertungsroutine WABE umgeleitet und durch diese die mit übermittelte, umgewertete Ziel-Rufnummer zrn' bewertet. Nach dieser Bewertung wird der Verbindungsaufbau für die bisher im Kommunikationssystem KS gehaltene Verbindung erfolgreich weitergeführt oder erfolglos abgebrochen. Bei einer erfolgreichen Zulässigkeitsprüfung wird die Verbindung zu dem Kommunikationsendgerät KE(z) aufgebaut, dessen Rufnummer rnr der umgewerteten Ziel-Rufnummer zrn' entspricht. Der Verbindungsaufbau kann alternativ auch über ein weiteres Kommunikationssystem KS(w) - in FIG 1 durch strichlierte Linien angedeutet - zu einem Kommunikationsendgerät KE(z) aufgebaut werden, dessen Rufnummer rnr der umgewerteten Ziel-Rufnummer zrn' entspricht.

FIG 3 zeigt in einem sich selbst erläuternden Ablaufdiagramm die in der Rufnummernbewertungsroutine RBR realisierte Zulässigkeitsprüfung in der Applikationseinrichtung PC für das angenommene Ausführungsbeispiel. Die Rufnummernbewertungsroutine RBR wird durch eine von einer aktivierten Sperr-Wahlbewertungsroutinen SWABE übermittelten Sperr-Wahlbewertungsroutinen-Meldung wam gestartet. Die für die Zulässigkeitsprüfung im Speicher SP gespeicherten Rufnummern zrn bzw. Rufnummernkombinationen rnr, zrn sowie die für eine Rufnummernumwertung vorgesehenen Ziel-Rufnummernkombinationen zrn, zrn' werden durch die Rufnummernbewertungsroutine RBR durch eingebundene Speicheradressen - nicht dargestellt - gelesen und zur Zulässigkeitsprüfung herangezogen.

## Patentansprüche

1. Verfahren zur Unterstützung einer Zulässigkeitsprüfung von Rufnummern (zrn) bzw. Rufnummernkombinationen (rnr, znr) von an einem Kommunikationssystem (KS) ankommenden Anrufen (ar),
wobei das Kommunikationssystem (KS) über eine Applikationsschnittstelle (ACL) mit einer Applikationseinrichtung (PC) verbunden ist,
- bei dem im Kommunikationssystem (KS) für eine Zulässigkeitsprüfung vorgesehene Kommunikationsanschlüsse (KA) zumindest einer Sperr-Wahlbewertungsroutine (SWABE) zugeordnet sind,
- bei dem die von den vorgesehenen Kommunikationsanschlüssen (KA) im Rahmen eines Anrufs (ar) an die Sperr-Wahlbewertungsroutine (SWABE) übermittelten Rufnummern (zrn) sowie die Rufnummern (rnr) des jeweiligen Kommunikationsanschlusses (KA) erfasst und nicht bewertbare Rufnummern (zrn) bzw. Rufnummerkombinationen (rnr, zrn) über die Applikationsschnittstelle (ACL) an die Applikationseinrichtung (PC) gemeldet werden, und
- bei dem die Anrufe (ar) im Kommunikationssystem (KS) solange gehalten werden, bis in der Applikationseinrichtung (PC) die übermittelten Rufnummern (zrn) bzw. Rufnummerkombinationen (rnr, zrn) hinsichtlich ihrer Zulässigkeit überprüft und ein Zulässigkeitsergebnis (acl-amo) von der Applikationseinrichtung (PC) an das Kommunikationssystems (KS) übermittelt ist.

2. Verfahren nach Anspruch 1, **dadurch gekennzeichnet, daß** im Kommunikationssystem (KS) in Abhängigkeit von dem jeweiligen, von der Applikationseinrichtung (PC) übermittelten Zulässigkeitsergebnis (acl-amo) der jeweilige Anruf (ar) zugelassen, abgebrochen oder umgesteuert wird.

3. Verfahren nach Anspruch 1 oder 2, **dadurch gekennzeichnet, daß** in der Applikationseinrichtung (PC) mit Hilfe von gespeicherten Ursprungs-Ziel-Rufnummernkombinationen (rnr,zrn) und der gemeldeten Ziel- und Ursprungs-Rufnummernkombinationen (rnr, zrn) eines Anrufs (ar) die Zulässigkeit der angegebenen Verkehrsbeziehung überprüft und in Abhängigkeit von der Übereinstimmung der Rufnummernkombinationen (rnr, zrn) ein Zulässigkeitsergebnis (acl-amo) an das Kommunikationssystem (KS) übermittelt wird, wobei bei unzulässigen Verkehrsbeziehungen durch das übermittelte Zulässigkeitsergebnis der jeweilige Anruf (ar) zurückgewiesen und bei zulässigen Verkehrsbeziehungen durch das Zulässigkeitsergebnis (acl-amo) der Verbindungsaufbau des jeweilige Anrufs (ar) weitergeführt wird.

4. Verfahren nach Anspruch 1 oder 2, **dadurch gekennzeichnet, daß** in der Applikationseinrichtung (PC) mit Hilfe von gespeicherten Rufnummern (zrn) und von der gemeldeten Ziel-Rufnummer (zrn) eines Anrufs (ar) die Zulässigkeit der Ziel-Rufnummer (zrn) überprüft wird, daß eine festgestellte, unzulässige Ziel-Rufnummer (zrn) in eine zulässige Ziel-Rufnummer (zrn') umgewertet wird, und daß als Zulässigkeitsergebnis (acl-amo) die umgewertete Ziel-Rufnummer (zrn') an die Sperr-Wahlbewertungsroutine (SWABE) im Kommunikationssystem (KS) übermittelt und der Verbindungsaufbau des jeweiligen Anrufs (ar) mit der umgewerteten Ziel-Rufnummer (zrn) weitergeführt wird.

5. Verfahren nach Anspruch 1 oder 2, **dadurch gekennzeichnet, daß** in der Applikationseinrichtung (PC) mit Hilfe von gespeicherten Rufnummern (zrn) und von der gemeldeten Ziel-Rufnummern (zrn) eines Anrufs (ar) die Zulässigkeit der Sperr-Wahlbewertungsroutine (SWABE) überprüft wird, daß nach dem Feststellen einer für die Bearbeitung der Ziel-Rufnummer (zrn) unzulässigen Sperr-Wahlbewertungsroutine (SWABE) eine zulässige Wahlbewertungsroutine (WABE) des Kommunikationssystems (KS) ermittelt und die Zielrufnummer (zrn) an die ermittelte, zulässige Wahlbewertungsroutine (WABE) übermittelt wird, auf die durch die das übermittelte Zulässigkeitsergebnis (acl-amo) der Anruf (ar) umgelenkt und in der der Verbindungsaufbau des Anrufs (ar) weitergeführt wird.

6. Verfahren nach einem der vorhergehenden Ansprüche, **dadurch gekennzeichnet, daß** die Zulässigkeitsprüfung mit Hilfe einer in der Sperr-Wahlbewertungsroutine (SWABE) gebildeten und an die Applikationseinrichtung (PC) übermittelten Sperr-Wahlbewertungsroutinen-Meldung (wam) eingeleitet und das Überprüfungsergebnis (acl-amo) durch eine in der Applikationseinrichtung (PC) gebildeten und an das Kommunikationssystem (KS) übermittelten, betriebstechnischen Applikationsanweisung (acl-amo) gemeldet wird.

7. Verfahren nach Anspruch 6, **dadurch gekennzeichnet,**
**daß** die Sperr-Wahlbewertungsroutinen-Meldung (wam) zumindest
- eine die Art der Sperr-Wahlbewertungsroutinen-Meldung (wam) anzeigende Identifikationsinformation (skz),
- eine zu bewertende Rufnummer (rnr,zrn) in einer Sperr-Wahlbewertungsrountine (SWABE) anzeigende Vermittlungsinformation (vzt),
- eine die Initialisierung der Sperr-Wahlbewertungsroutinen-Meldung (wam) anzeigende Modulinformation (poi),
- eine den rufenden und gerufenen Kommunikationsanschluß (KA) bestimmende Rufnummer (rnr,zrn), sowie
- eine die meldende Wahlbewertungsroutine (SWABE) anzeigende Gruppeninformation (wg) aufweist.

8. Verfahren nach Anspruch 6, **dadurch gekennzeichnet,**
**daß** eine betriebstechnische Applikationsanweisung (acl-amo)
- eine die Art der betriebstechnischen Applikationsanweisung (acl-amo) anzeigende Identifikationsinformation (skz),
- eine die vermittlungstechnische Aktion anzeigende Vermittlungsinformation (vtz),
- eine die Zuordnung der betriebstechnischen Applikationsanweisung (acl-amo) anzeigende Referenzinformation (ref), und,
sofern ermittelt,
- eine im Kommunikationssystem (KS) erneut zu bewertende Rufnummer (zrn') oder eine Rufnummer (zrn'), an die der Ruf (ar) umzuleiten ist, sowie
- eine andere Wahlbewertungsroutine (WABE) anzeigende Wahlbewertungsinformation (wg) aufweist.

9. Verfahren nach einem der vorhergehenden Ansprüche, **dadurch gekennzeichnet,**
**daß** eine Sperr-Wahlbewertungsroutine (SWABE) durch eine in der Applikationseinrichtung (PC) gebildete und an das Kommunikationssystem (KS) übermittelte Auftragsanforderung (aa) eingerichtet bzw. deaktiviert wird und
**daß** das Einrichten bzw. Deaktivieren durch eine im Kommunikationssystem (KS) gebildete und an die Applikationseinrichtung (PC) übermittelte Auftragsquittung (aq) bestätigt wird, wobei durch die Auftragsanforderung (aa) die zu überprüfenden Rufnummern (zrn) bzw. Rufnummernkombinationen (rnr,zrn) in einen der Sperr-Wahlbewertungsroutine (SWABE) zugeordneten Speicher (SP) gespeichert werden.

10. Verfahren nach Anspruch 9, **dadurch gekennzeichnet,**
**daß** die Auftragsanforderung (aa) sowie die Auftragsquittung (aq)
- eine Identifikationsinformation (skz),
- eine im Kommunikationssystem (KS) das Einrichten bzw. Deaktivieren bewirkende Auftragsinformation (ac) oder eine das Einrichten bzw. Deaktivieren bestätigende Auftragsquittierungsinformation (ac),
- eine Referenzinformation (ref),
- eine das zu beeinflussende Leistungsmerkmal anzeigende Leistungsmerkmalinformation (lm),
- eine die jeweilige Wahlbewertungsroutine (WABE) anzeigende Wahlbewertungsinformation (wg)
und beim Einrichten einer Sperr-Wahlbewertungsroutine (SWABE)
- eine die Anzahl von zur Bewertung heranzuziehenden Ziffern anzeigende Zifferninformation (zi) und eine den einer Ziffernkombination zugeordneten Kennzahlpunkt anzeigende Kennzahlpunktinformation (kzi) aufweist.

11. Applikationseinrichtung zur Unterstützung einer Zulässigkeitsprüfung von Rufnummern (zrn) bzw. Rufnummernkombinationen (rnr, zrn) von an einem Kommunikationssystem (KS) ankommenden Anrufen (ar), mit
- einem Mikroprozessorsystem (MPS) zur Überwachung der Applikationseinrichtung (PC) und zur Ausführung einer programmtechnisch realisierten und in einem Speicher (SP) gespeicherten
- Rufnummerbewertungsroutine (RBR)
-- zur Zulässigkeitsprüfung von in einer Sperr-Wahlbewertungsroutinen-Meldung (wam) übermittelten Ziel-Rufnummern (zrn) und sofern ermittelt, zur Umwertung von unzulässigen in zulässige Ziel-Rufnummern (zrn') sowie zur Bildung einer betriebstechnischen Applikationsanweisung (acl-amo) in Abhängigkeit von der Zulässigkeitsprüfung bzw. der Rufnummernumwertung und
-- zur Zulässigkeitsprüfung von in einer Sperr-Wahlbewertungsroutinen-Meldung (wam) übermittelten Rufnummernkombinationen (rnr, zrn) und zur Bildung einer betriebstechnischen Applikationsanweisung (acl-amo) in Abhängigkeit von der Zulässigkeitsüberprüfung.

12. Applikationseinrichtung nach Anspruch 11, **dadurch gekennzeichnet, daß** die Applikationseinrichtung (PC) durch einen Personalcomputer (PC) realisiert ist, in dessen Speicher (SP) die zu überprüfenden, umzuwertenden sowie zum Routen über weitere Kommunikationsnetze (KN) vorgesehenen Rufnummern (rnr, zrn, zrn') sowie die programmtechnisch realisierte Rufnummernbewertungsroutine (RBR) gespeichert sind.

## Claims

1. Method for assisting in checking the permissibility of call numbers (zrn) and/or call number combinations (rnr, znr) of calls (ar) coming to a communication system (KS), with the communication system (KS) being connected to an application device (PC) by way of an application interface (ACL),
- in which communication terminals (KA) provided in the communication system (KS) for checking permissibility are assigned to at least one blocking selection evaluation routine (SWABE),
- in which the call numbers (zrn) transmitted from the provided communication terminals (KA) to the blocking selection evaluation routine (SWABE) in the context of a call (ar) as well as the call numbers (rnr) of the respective communication terminal (KA) are detected and call numbers (zrn) and/or call number combinations (rnr, zrn) that cannot be evaluated are notified to the application device (PC) by way of the application interface (ACL), and
- in which the calls (ar) are held in the communication system (KS) until the permissibility of the transmitted call numbers (zrn) and/or call number combinations (rnr, zrn) is checked in the application device (PC) and a permissibility result (acl-amo) is transmitted from the application device (PC) to the communication system (KS).

2. Method according to claim 1, **characterised in that** the respective call (ar) is permitted, terminated or rerouted in the communication system (KS) as a function of the respective permissibility result (acl-amo) transmitted by the application device (PC).

3. Method according to claim 1 or 2, **characterised in that** the permissibility of the specified traffic relation is checked in the application device (PC) with the aid of stored origin-destination call number combinations (rnr, zrn) and the notified destination and origin call number combinations (rnr, zrn) of a call (ar) and a permissibility result (acl-amo) is transmitted to the communication system (KS) as a function of the correspondence of the call number combinations (rnr, zrn), with the respective call (ar) being rejected in the case of impermissible traffic relations due to the transmitted permissibility result and the connection setup of the respective call (ar) being continued in the case of permissible traffic relations due to the permissibility result (acl-amo).

4. Method according to claim 1 or 2, **characterised in that** the permissibility of the destination call number (zrn) is checked in the application device (PC) with the aid of stored call numbers (zrn) and the notified destination call number (zrn) of a call (ar), that a determined, impermissible destination call number (zrn) is translated to a permissible destination call number (zrn') and that the translated destination call number (zrn') is transmitted to the blocking selection evaluation routine (SWABE) in the communication system (KS) as a permissibility result (acl-amo) and the connection setup of the respective call (ar) with the translated destination call number (zrn) is continued.

5. Method according to claim 1 or 2, **characterised in that** the permissibility of the blocking selection evaluation routine (SWABE) is checked in the application device (PC) with the aid of stored call numbers (zrn) and notified destination call numbers (zrn) of a call (ar), that a permissible selection evaluation routine (WABE) of the communication system (KS) is determined after establishing a blocking selection evaluation routine (SWABE) which is impermissible for the processing of the destination call number (zrn) and the destination call number (zrn) is transmitted to the determined permissible selection evaluation routine (WABE), to which the call (ar) is diverted due to the transmitted permissibility result (acl-amo) and in which the connection setup of the call (ar) is continued.

6. Method according to one of the preceding claims, **characterised in that** the permissibility check is initiated with the aid of a blocking selection evaluation routine message (wam) formed in the blocking selection evaluation routine (SWABE) and transmitted to the application device (PC) and the permissibility result (acl-amo) is notified by means of an operational application instruction (acl-amo) formed in the application device (PC) and transmitted to the communication system (KS).

7. Method according to claim 6, **characterised in that** the blocking selection evaluation routine message (wam) has at least
- an item of identification information (skz) indicating the type of blocking selection evaluation routine message (wam)
- an item of switching information (vzt) indicating a call number (rnr, zrn) to be evaluated in a blocking selection evaluation routine (SWABE),
- an item of module information (poi) indicating the initialisation of the blocking selection evaluation routine message (wam),
- a call number (rnr, zrn) determining the calling and called communication terminal (KA) as well as
- an item of group information (wg) indicating the notifying selection evaluation routine (SWABE).

8. Method according to claim 6, **characterised in that** an operational application instruction (acl-amo) has
- an item of identification information (skz) indicating the type of operational application instruction (acl-amo)
- an item of switching information (vtz) indicating the switching-specific action,
- an item of reference information (ref) indicating the assignment of the operational application instruction (acl-amo) and,
if determined,
- a call number (zrn') to be evaluated again in the communication system (KS) or a call number (zrn'), to which the call (ar) is to be diverted, and
- an item of evaluation information (wb) indicating another selection evaluation routine (WABE).

9. Method according to one of the preceding claims,
**characterised in that**
a blocking selection evaluation routine (SWABE) is set up and/or deactivated by means of an order request (aa) formed in the application device (PC) and transmitted to the communication system (KS) and
the setup and/or deactivation is confirmed by an order acknowledgement (aq) formed in the communication system (KS) and transmitted to the application device (PC), with the call numbers (zrn) and/or the call number combinations (rnr, zrn) to be checked being stored in a storage device (SP) assigned to the blocking selection evaluation routine (SWABE) by means of the order request (aa).

10. Method according to claim 9, **characterised in that** the order request (aa) as well as the order acknowledgement (aq) has
- an item of identification information (skz),
- an item of order information (ac) effecting the setup and/or deactivation in the communication system (KS) or an item of order acknowledgement information (ac) confirming the setup and/or deactivation,
- an item of reference information (ref),
- an item of performance feature information (lm) indicating the performance feature to be influenced,
- an item of selection evaluation information (wg) indicating the respective selection evaluation routine (WABE) and when setting up a blocking selection evaluation routine (SWABE)
- has an item of digit information (zi) indicating the number of digits to be used for evaluation purposes and an item of codepoint information (kzi) indicating the codepoint assigned to a digit combination.

11. Application device for assisting in checking the permissibility of call numbers (zrn) and/or call number combinations (rnr, zrn) of calls (ar) coming to a communication system (KS), having
- a microprocessor system (MPS) for monitoring the application device (PC) and for executing a call number evaluation routine (RBR) realised in a program-specific fashion and stored in a storage device (SP) and
- - for checking the permissibility of destination call numbers (zrn) transmitted in a blocking selection evaluation routine message (wam) and, if determined, for translating impermissible to permissible call numbers (zrn') and for forming an operational application instruction (acl-amo) as a function of the permissibility check and/or the call number translation and
- - for checking the permissibility of call number combinations (rnr, zrn) transmitted in a blocking selection evaluation routine message (wam) and for forming an operational application instruction (acl-amo) as a function of the permissibility check

12. Application device according to claim 11, **characterised in that** the application device (PC) is realised by a personal computer (PC), in the storage device (SP) of which the call numbers (rnr, zrn, xrn') provided to be checked, translated and routed via further communication networks (KN) as well as the call number evaluation routine (RB) realised in a program-specific fashion are stored.

## Revendications

1. Procédé destiné au support d'un contrôle d'admissibilité de numéros d'appel (zrn) resp. de combinaisons de numéros d'appel (rnr, zrn) d'appels (ar) entrant sur un système de communication (KS), le système de communication (KS) étant connecté à un dispositif d'application (PC) par l'intermédiaire d'une interface d'application (ACL),
- dans lequel des branchements de communication (KA) prévus pour un contrôle d'admissibilité dans le système de communication (KS) sont affectés à au moins une routine d'évaluation de sélection pour blocage (SWABE),
- dans lequel les numéros d'appel (zrn) transmis à la routine d'évaluation de sélection pour blocage (SWABE) par les branchements de communication prévus (KA) dans le cadre d'un appel (ar), ainsi que les numéros d'appel (rnr) du branchement de communication respectif (KA) sont enregistrés et dans lequel les numéros d'appel non évaluables (zrn) resp. les combinaisons de numéros d'appel non évaluables (rnr, zrn) sont signalés au dispositif d'application (PC) par l'intermédiaire de l'interface d'application (ACL), et
- dans lequel les appels (ar) sont maintenus dans le système de communication (KS) jusqu'à ce que les numéros d'appel (zrn) resp. les combinaisons de numéros d'appel (rnr, zrn) transmis soient vérifiés dans le dispositif d'application (PC) en ce qui concerne leur admissibilité et qu'un résultat d'admissibilité (acl-amo) soit transmis au système de communication (KS) par le dispositif d'application (PC).

2. Procédé selon la revendication 1, **caractérisé en ce que** l'appel respectif (ar) est admis, interrompu ou rerouté dans le système de communication (KS) en fonction du résultat d'admissibilité (acl-amo) respectif transmis par le dispositif d'application (PC).

3. Procédé selon la revendication 1 ou 2, **caractérisé en ce que** l'admissibilité de la relation de trafic indiquée est vérifiée dans le dispositif d'application (PC) à l'aide de combinaisons de numéros d'appel d'origine mémorisées et de destination (rnr, zrn) et des combinaisons de numéros d'appel d'origine et de destination signalées (rnr, zrn) d'un appel (ar) et **en ce qu'**en fonction de la concordance des combinaisons de numéros d'appel (rnr, zrn), un résultat d'admissibilité (acl-amo) est transmis au système de communication (KS), l'appel respectif (ar), en cas de relations de trafic non admissibles, étant refusé en raison du résultat d'admissibilité transmis et, en cas de relations de trafic admissibles, l'établissement de liaison de l'appel respectif (ar) étant continué en raison du résultat d'admissibilité (acl-amo).

4. Procédé selon la revendication 1 ou 2, **caractérisé en ce que** l'admissibilité du numéro d'appel de destination (zrn) est vérifiée dans le dispositif d'application (PC) à l'aide de numéros d'appel mémorisés (zrn) et du numéro d'appel de destination signalé (zrn) d'un appel (ar), **en ce qu'**un numéro d'appel de destination (zrn) constaté, non admissible est converti en un numéro d'appel de destination admissible (zrn'), et **en ce que** le numéro d'appel de destination converti (zrn') est transmis dans le système de communication (KS) à la routine d'évaluation de sélection pour blocage (SWABE) en tant que résultat d'admissibilité (acl-amo) et **en ce que** l'établissement de liaison de l'appel respectif (ar) est continué avec le numéro d'appel de destination converti (zrn).

5. Procédé selon la revendication 1 ou 2, **caractérisé en ce que** l'admissibilité de la routine d'évaluation de sélection pour blocage (SWABE) est vérifiée dans le dispositif d'application (PC) à l'aide de numéros d'appel mémorisés (zrn) et du numéro d'appel de destination signalé (zrn) d'un appel (ar), **en ce qu'**après la constatation d'une routine d'évaluation de sélection pour blocage (SWABE) non admissible pour le traitement du numéro d'appel de destination (zrn), une routine d'évaluation de sélection (WABE) admissible du système de communication (KS) est déterminée et **en ce que** le numéro d'appel de destination (zrn) est transmis à la routine d'évaluation de sélection admissible déterminée (acl-amo), sur laquelle l'appel (ar) est rerouté en raison du résultat d'admissibilité transmis (acl-amo) et dans laquelle l'établissement de liaison de l'appel (ar) est continué.

6. Procédé selon l'une quelconque des revendications précédentes, **caractérisé en ce que** le contrôle d'admissibilité est initié à l'aide d'un message (wam) de routine d'évaluation de sélection pour blocage formé dans la routine d'évaluation de sélection pour blocage (SWABE) et transmis au dispositif d'application (PC) et **en ce que** le résultat du contrôle (acl-amo) est signalé par une instruction d'application (acl-amo) relative à l'exploitation, formée dans le dispositif d'application (PC) et transmise au système de communication (KS).

7. Procédé selon la revendication 6, **caractérisé en ce que** le message de routine d'évaluation de sélection pour blocage (wam) présente
- au moins une information d'identification (skz) indiquant le type de message de routine d'évaluation de sélection pour blocage (wam),
- une information de commutation (vzt) indiquant le numéro d'appel (rnr, zrn) à évaluer dans une routine d'évaluation de sélection pour blocage (SWABE),
- une information de module (poi) indiquant l'initialisation du message de routine d'évaluation de sélection pour blocage (wam),
- un numéro d'appel (rnr, zrn) déterminant le branchement de communication appelant et appelé (KA), ainsi qu'
- une information groupée (wg) indiquant la routine d'évaluation de sélection (SWABE) réalisant le message.

8. Procédé selon la revendication 6, **caractérisé en ce qu'** une instruction d'application (acl-amo) relative à l'exploitation présente
- une information d'identification (skz) indiquant le type de l'instruction d'application (acl-amo) relative à l'exploitation,
- une information de commutation (vtz) indiquant l'action relative à l'exploitation,
- une information de référence (ref) indiquant l'affectation de l'instruction d'application (acl-amo) relative à l'exploitation, et,
dans la mesure où ils ont été déterminés,
- un numéro d'appel (zrn') à évaluer de nouveau dans le système de communication (KS) ou un numéro d'appel (zrn') auquel l'appel (ar) doit être renvoyé, ainsi qu'
- une information d'évaluation de sélection (wg) indiquant une autre routine d'évaluation de sélection (WABE).

9. Procédé selon l'une quelconque des revendications précédentes, **caractérisé en ce qu'**
une routine d'évaluation de sélection pour blocage (SWABE) est configurée resp. désactivée en raison d'une demande d'ordre (aa) formée dans le dispositif d'application (PC) et transmise au système de communication (KS) et
**en ce que** la configuration resp. la désactivation est confirmée par un accusé de réception d'ordre (aq) formé dans le système de communication (KS) et transmis au dispositif d'application (PC), les numéros d'appel à vérifier (zrn) resp. les combinaisons de numéros d'appel (rnr, zrn) à vérifier étant mémorisés dans une mémoire (SP) affectée à la routine d'évaluation de sélection pour blocage (SWABE) en raison de la demande d'ordre (aa).

10. Procédé selon la revendication 9, **caractérisé en ce que** la demande d'ordre (aa) ainsi que l'accusé de réception d'ordre (aq) présentent
- une information d'identification (skz),
- une information d'ordre (ac) causant la configuration resp. la désactivation dans le système de communication (KS) ou une information d'accusé de réception d'ordre (ac) confirmant la configuration resp. la désactivation,
- une information de référence (ref),
- une information de complément de service (lm) indiquant le complément de service à influencer,
- une information d'évaluation de sélection (wg) indiquant la routine d'évaluation de sélection respective (WABE)
et lors de la configuration d'une routine d'évaluation de sélection pour blocage (SWABE)
- une information de chiffre (zi) indiquant le nombre de chiffres à prendre en compte pour l'évaluation et une information de point d'indicatif (kzi) indiquant le point d'indicatif affecté à une combinaison de chiffres.

11. Dispositif d'application destiné au support d'un contrôle d'admissibilité de numéros d'appel (zrn) resp. de combinaisons de numéros d'appel (rnr, zrn) d'appels (ar) entrant sur un système de communication (KS), comprenant
- un système de microprocesseurs (MPS) pour la surveillance du dispositif d'application (PC) et pour l'exécution
- d'une routine d'évaluation de numéros d'appel (RBR) réalisée dans un programme et mémorisée dans une mémoire (SP)
- - pour le contrôle d'admissibilité de numéros d'appel de destination (zrn) transmis dans un message de routine d'évaluation de sélection pour blocage (wam) et, dans la mesure où ils ont été déterminés, pour la conversion de numéros d'appels de destination non admissibles en numéros d'appels de destination admissibles (zrn') ainsi que pour la formation d'une instruction d'application (acl-amo) relative à l'exploitation, en fonction du contrôle d'admissibilité resp. de la conversion de numéros d'appel et
- - pour le contrôle d'admissibilité de combinaisons de numéros d'appel (rnr, zrn) transmises dans un message de routine d'évaluation de sélection pour blocage (wam) et pour la formation d'une instruction d'application (acl-amo) relative à l'exploitation, en fonction du contrôle d'admissibilité.

12. Dispositif d'application selon la revendication 11, **caractérisé en ce que** le dispositif d'application (PC) est réalisé par un ordinateur personnel (PC), dans la mémoire (SP) duquel sont mémorisés les numéros d'appel (rnr, zrn, zrn') à vérifier, à convertir ainsi que ceux prévus pour être acheminés par l'intermédiaire d'autres réseaux de communication (KN) ainsi que la routine d'évaluation de numéros d'appel (RBR) réalisée dans un programme.
